# EUROPÄISCHE PATENTSCHRIFT

(11) **EP 1 526 966 B1**
(45) Veröffentlichungstag und Bekanntmachung des Hinweises auf die Patenterteilung: **05.04.2006**
(21) Anmeldenummer: 03766310.1
(22) Anmeldetag: 25.07.2003
(51) Int. Cl.: B32B 27/34, B32B 27/08, B65D 85/76

(54) **FOLIE MIT EINER GASBARRIERESCHICHT**
FILM COMPRISING A GAS BARRIER LAYER
FILM COMPRENANT UNE COUCHE BARRIERE AU GAZ

(30) Priorität: 30.07.2002 DE 10234783
(43) Veröffentlichungstag der Anmeldung: 04.05.2005
(73) Patentinhaber: CFS Kempten GmbH, 87437 Kempten (DE)
(72) Erfinder: BERNIG, Walter, 87549 Rettenberg (DE); DUJARDIN, Bernard, B-1180 Brüssel (BE); JENDROSCH, Stefan, 87724 Ottobeuren (DE); SCHWEITZER, Christoph, 87634 Obergünzburg (DE)
(74) Vertreter: Kutzenberger, Helga
(86) Internationale Anmeldenummer: PCT/EP2003/008256
(87) Internationale Veröffentlichungsnummer: WO 2004/012939

(56) Entgegenhaltungen:
- EP-A- 0 615 691
- US-A- 5 612 446
- US-A- 5 763 095

## Beschreibung

Die vorliegende Erfindung betrifft eine Kunststoffolie, die wenigstens eine Gasbarriereschicht bestehend im wesentlichen aus einer Mischung aus Ethylen/Vinylalkohol-Copolymer (EVOH) und wenigstens einem Multipolyamid aufweist, die Verwendung dieser Folie zur Verpackung von verderblichen, gasenden Produkten, wie Lebensmittel, sowie eine Verpackung für verderbliche, gasende Produkte, wie Lebensmittel, insbesondere Käsereifebeutel aus dieser Folie.

Zahlreiche verderbliche Produkte, wie Lebensmittel, werden zum Schutz vor Umwelteinflüssen, wie Sauerstoff und/oder Feuchtigkeit, in Kunststofffolien verpackt, um dadurch ihre Haltbarkeit zu steigern. Manchmal gasen diese Produkte während ihrer Lagerung noch, da sie zum Zeitpunkt der Verpackung noch nicht ausgereift sind. So wird beispielsweise bei der Käsereifung durch die Käsemikroflora Kohlendioxid gebildet. Von einem Verpackungsmaterial für verderbliche, gasende Produkte, insbesondere für Lebensmittel, wird daher eine niedrige Sauerstoffdurchlässigkeit neben einer ausreichend hohen Kohlendioxiddurchlässigkeit verlangt. Dadurch soll das Produkt vor Sauerstoff von außen geschützt und gleichzeitig das sich bildende Kohlendioxid nach außen abgegeben werden. Durch die Abgabe des sich bildenden CO₂ an die Umgebung aus der Verpackung heraus wird verhindert, daß sich das Kohlendioxid in der Verpackung anreichert und die Verpackung durch Überdruck zerplatzt.

Verderbliche, gasende Lebensmittel enthalten häufig auch Feuchtigkeit. So ist z. B. ein noch nicht vollständig gereifter Käse nach seiner Behandlung mit Salzlake noch feucht. Von einem geeigneten Verpackungsmaterial für ein solches Produkt mit einer schwankenden Feuchtigkeit wird daher eine geringe Abhängigkeit der Sauerstoffundurchlässigkeit bzw. der Kohlendioxiddurchlässigkeit von dem jeweiligen Feuchtigkeitsgehalt des verpackten Gutes oder der Umgebung verlangt.

In den letzten Jahren wurden zahlreiche Kunststoffolien zur Verpackung von verderblichen, gasenden Produkten wie reifendem Käse entwickelt. Es besteht jedoch weiterhin ein Bedarf an leicht zu verarbeitenden Kunststoffolien als Verpackungsmaterial mit einer möglichst niedrigen Sauerstoffdurchlässigkeit, die weitgehend unabhängig von der Umgebungsfeuchte und/oder der Feuchtigkeit des verpackten Gutes ist und mit einer ausreichenden Kohlendioxiddurchlässigkeit, die im trockenen wie im feuchten Zustand jeweils ein Vielfaches der Sauerstoffdurchlässigkeit beträgt, so daß nicht nur die Verderblichkeit eines noch reifenden und damit gasenden Lebensmittels wie Käse, sondern auch die Gefahr des Berstens einer Verpackung während des Reifeprozesses weitgehend verhindert werden kann.

Aufgabe der vorliegenden Erfindung war es daher, eine Kunststoffolie mit einer möglichst niedrigen Sauerstoffdurchlässigkeit zur Verfügung zu stellen, die weitgehend unabhängig von dem Feuchtigkeitsgehalt des verpackten Produktes und/oder der Umgebungsfeuchte ist und deren Kohlendioxiddurchlässigkeit zur Sauerstoffdurchlässigkeit ≥ 3:1 beträgt.

Erfindungsgemäß wird diese Aufgabe durch das zur Verfügung-Stellen einer Kunststoffolie gelöst, die wenigstens eine O₂-Gasbarriereschicht bestehend im wesentlichen aus einer Mischung aus einem EthylenNinylalkohol-Copolymer (EVOH) und wenigstens einem Multipolyamid umfaßt oder daraus hergestellt ist, wobei das Multipolyamid aus den 3 Komponenten
I. Hexamethylendiamin/Adipinsäure (Polyamid 6,6),
II. Hexamethylendiamin/Acelainsäure (Polyamid 6, 9) und/oder Hexamethylendiamin/Sebazinsäure (Polyamid 6,10) und
III. Hexamethylendiamin/lsophthalsäure (Polyamid 6 I) und/oder Hexamethylen/Terephthalsäure (Polyamid 6 T)
aufgebaut ist.

Das zur Herstellung der O₂-Gasbarriereschicht zum Einsatz kommende Multipolyamid ist vorzugsweise aus
a.) 15 - 75 mol% der Komponente I,
b.) 15 - 55 mol% der Komponente II und
c.) 10 - 70 mol% der Komponente III
aufgebaut, wobei die Gesamtmenge der Komponenten immer 100 mol% ergeben muß.

Weiter bevorzugt für die Herstellung der O₂-Gasbarriereschicht ist ein Multipolyamid, das aus
a.) 50 - 60 mol% der Komponente I,
b.) 15 - 55 mol% der Komponente II,
c.) 10-45 mol% der Komponente III
aufgebaut ist, wobei die Gesamtmenge der Komponenten immer 100 mol% ergeben muß.

Ganz besonders bevorzugt wird für die Herstellung der Mischung, aus der die O₂-Gasbarriereschicht aufgebaut wird, ein Multipolyamid verwendet, das aus
a.) 35-55 mol% der Komponente I,
b.) 15 - 55 mol% der Komponente II und
c.) 10 - 30 mol% der Komponente III
aufgebaut ist, wobei die Gesamtmenge der Komponenten immer 100 mol% ergeben muß.

Zur Herstellung der Mischung, aus der die O₂-Gasbarriereschicht im wesentlichen besteht, wird vorzugsweise ein EthylenNinylalkohol-Copolymer aus 20 - 50 mol% Ethylen, besonders bevorzugt 42 - 48 mol% Ethylen, ganz besonders bevorzugt 38 - 48 mol% Ethylen, verwendet, das durch Verseifung des entsprechenden Ethylen/Vinylacetat-Copolymeren hergestellt worden ist.

Die Mischung, die zur Herstellung der O₂-Gasbarriereschicht eingesetzt wird, besteht vorzugsweise aus 10 - 45 Gew.-%, besonders bevorzugt 20 - 40 Gew.-% EVOH und 55 - 90 Gew.-% bzw. besonders bevorzugt 60 - 80 Gew.-% des vorstehend beschriebenen Multipolyamid, wobei die Gesamtmenge der beiden Komponenten immer 100 Gew.-% ergeben muß. Vorzugsweise werden die beiden Mischungskomponenten zur Herstellung der Mischung in üblichen Mischaggregaten zu einem Polymerblend verarbeitet.

Vorzugsweise weist die erfindungsgemäße Folie neben der O₂-Gasbarriereschicht noch wenigstens 2 Außen- oder Oberflächenschichten auf, wovon zumindest eine siegelbar sein sollte.

Die Siegelschicht enthält vorzugsweise die üblichen als Siegelschichtmaterial verwendeten Polymeren oder Mischungen, ausgewählt aus der Gruppe umfassend Copolymerisate aus Ethylen und Vinylacetat, vorzugsweise mit einem Gehalt an Vinylacetat von höchstens 20 Gew.-%, bezogen auf das Gesamtgewicht des Polymeren, Copolymerisate aus Ethylen und einem Ester einer α-, β-ungesättigten Carbonsäure, wie Butylacrylat oder Ethylacrylat, Copolymerisate aus Ethylen und einer α-, β-ungesättigten Carbonsäure, wie Acrylsäure, wobei vorzugsweise der Gehalt an Carbonsäure höchstens 15 Gew.-%, bezogen auf das Gesamtgewicht des Copolymeren, beträgt, Copolymerisate aus Ethylen und α-Olefinen mit wenigstens 3 C-Atomen wie Buten, Hexen, Octen, 4-Methyl-1-penten (LLDPE = Linear Low Density Polyethylen), wobei das Copolymerisat aus Ethylen und α-Olefin mit konventionellen Katalysatoren oder mit Metallocenkatalysatoren hergestellt sein kann und die Dichte des Copolymerisats im Bereich von 0,915 - 0,93 g/cm³ liegen sollte. Weiterhin geeignet als Siegelschichtmaterial ist VLDPE (Very Low Density PE), dessen Dichte ≤ 0,915 g/cm³ beträgt. Als Siegelschichtmaterial wird vorzugsweise eine Mischung aus 40 - 65 Gew.-% LLDPE und 35 - 60 Gew.-% EthylenNinylacetat-Copolymerisats eingesetzt, jeweils bezogen auf 100 Gew.-% der Polymerkomponenten.

Sowohl die Siegelschicht als auch die zweite Außen- bzw. Oberflächenschicht kann die üblichen Additive wie Antiblock-, Antistatik- und/oder Gleit-Mittel enthalten. Zur Herstellung der zweiten Oberflächenschicht werden Polymere verwendet, die zur Herstellung der Siegelschicht, wie vorstehend angegeben, eingesetzt werden. Besonders bevorzugt bestehen beide Außen- bzw. Oberflächenschichten aus denselben Polymerkomponenten, wobei aber unterschiedliche Mischungsverhältnisse der Komponenten vorliegen können. Bevorzugt weist die zweite Außen- bzw. Oberflächenschicht ein Schichtmaterial auf, das aus einer Mischung aus 1 - 25 Gew.-% LLDPE und 99 - 75 Gew.-% eines Copolymerisats aus Ethylen/Vinylacetat besteht, jeweils bezogen auf 100 Gew.-% der Polymerkomponenten.

Vorzugsweise ist daher die erfindungsgemäße Folie mehrschichtig aufgebaut, wobei außer der O₂-Gasbarriereschicht die Folie noch 2 Oberflächen- bzw. Außenschichten aufweist, wovon eine siegelbar ist und beide Außenschichten mit der O₂-Gasbarriereschit jeweils vorzugsweise über Haftvermittlerschicht verbunden sind.

Als Material für die Haftvermittlerschicht kann bevorzugt ein Kaschierklebstoff auf Basis von Polyurethanen oder Polyesterurethanen oder eines extrudierbaren Polymeren verwendet werden. Bevorzugt wird als extrudierbarer Haftvermittler ein modifiziertes Polyolefin eingesetzt. In bevorzugter Form ist dies ein Polyolefin mit Carboxylgruppen wie z. B. Polyethylen, Polypropylen, ein Ethylen/α-Olefin-Copolymerisat oder ein Ethylen/Vinylacetat-Copolymerisat, das jeweils zumindest mit einem Monomeren aus der Gruppe der α-, -β- einfach ungesättigten Dicarbonsäuren, wie beispielsweise Maleinsäure, Fumarsäure, Itaconsäure oder deren Säuranhydriden, Säureestern, Säureamiden oder Säureimiden gepfropft ist. Als extrudierbare Haftvermittlerpolymere können neben Copolymerisaten von Ethylen mit α-, -β- einfach ungesättigten Carbonsäuren wie Acrylsäure, Methacrylsäure oder deren Metallsalze, wie Zink oder Natrium und/oder deren Alkyl(C₁-C₄)Ester oder entsprechenden Pfropfpolymeren auf Polyolefinen wie z. B. Polyethylen, Polypropylen oder Ethylen/α-Olefin-Copolymerisaten, die mit einem Monomer der genannten ungesättigten Säuren pfropfpolymerisiert sind, zum Einsatz kommen. Besonders bevorzugt sind Polyolefine mit gepfropften α-, -β- einfach ungesättigten Dicarbonsäureanhydrid, insbesondere mit Maleinsäureanhydrid gepfropftes Ethylen/α-Olefin-Copolymerisat oder gepfropftes Ethylen/Vinylacetat-Copolymerisat, vorzugsweise mit m-LLDPE abgemischt. Dabei kann eine solche Mischung 40 - 60 Gew.-% LLDPE aufweisen.

Vorzugsweise kann wenigstens eine der Haftvermittlerschichten eingefärbt sein, vorzugsweise mit Hilfe eines lebensmittelrechtlich zugelassenen Farbstoffes.

Die erfindungsgemäße O₂-Gasbarriereschicht hat vorzugsweise eine Dicke von mindestens 3 µm, besonders bevorzugt von 4 -10 µm. Die gegebenenfalls vorhandenen Außenschichten, d. h. die Oberflächenschichten, haben jeweils eine Dicke von 5-20 µm, vorzugsweise eine Dicke von 8 - 17 µm und die gegebenenfalls vorhandenen Haftvermittlerschichten haben jeweils vorzugsweise eine Dicke von 5-20 µm, vorzugsweise 6-18 µm.

Die erfindungsgemäße Ein- oder Mehrschichtfolie kann nach allen bekannten Verfahren wie dem Folienlaminations- oder Extrusions- oder Folienblas-Verfahren, vorzugsweise gemäß einem Coextrusionsfolienblasverfahren hergestellt werden.

Vorzugsweise ist die Folie zumindest mono-, besonders bevorzugt biaxial gereckt, wobei sowohl in Längs- als in Querreckung mindestens ein Reckverhältnis von 1:3 angestrebt wird.

Vorzugsweise ist die erfindungsgemäße Folie schrumpffähig, besonders bevorzugt weist sie einen Schrumpf in Längsrichtung von mindestens 30%, vorzugsweise mindestens 35%, und in Querrichtung von wenigstens 35%, vorzugsweise mindestens 38%, bei einer Temperatur von 90-100 °C auf. Dazu ist mindestens eine Schicht der erfindungsgemäßen Folie vernetzt, vorzugsweise durch Bestrahtung bzw. e-Strahlhärtung.

Dadurch, daß die erfindungsgemäße Mehrschichtfolie vorzugsweise Außenschichten mit einem hohen Anteil an Polyolefinen, vorzugsweise Polyethylen, aufweist, weist sie auch eine geringe Wasserdampfdurchlässigkeit auf.

Da mit der erfindungsgemäßen Folie ein Verhältnis von Sauerstoffdurchlässigkeit zu Kohlendioxiddurchlässigkeit von mindestens 1:3 und eine niedrige Sauerstoffdurchlässigkeit erzielt wird, wobei die Sauerstoffdurchlässigkeit weitgehend unabhängig von der Feuchtigkeit des verpackten Produktes und/oder der Umgebungsfeuchte ist und daher der Wert trocken zu feucht höchstens im Bereich 1:0,90 bis 1:1,25, vorzugsweise 1:0,95 bis 1:1,20, schwankt, eignet sich die erfindungsgemäße Folie insbesondere als Verpackungsmaterial für gasende Lebensmittel.

Ein weiterer Gegenstand der Erfindung ist daher die Verwendung der erfindungsgemäßen Folie, vorzugsweise einer mehrschichtigen Folie zur Verpackung von verderblichen, gasenden Produkten, vorzugsweise von Lebensmitteln. Die erfindungsgemäße Folie eignet sich besonders zur Verpackung von Käse, vorzugsweise von halbhartem und/oder hartem Käse, besonders bevorzugt von noch reifendem Käse.

Ein weiterer Gegenstand der Erfindung ist eine Verpackung für verderbliche, gasende Produkte, vorzugsweise Lebensmittel, besonders bevorzugt von noch reifendem Käse, aus der erfindungsgemäßen Folie.

Ein weiterer Gegenstand der Erfindung ist daher auch ein Käsereifebeutel aus der erfindungsgemäßen Folie, vorzugsweise einer mehrschichtigen Folie.

Die Sauerstoffdurchlässigkeit der erfindungsgemäßen Folie wird nach ASTM D3985 bestimmt. Dazu wird die eine Seite der Folie unter kontrollierten Bedingungen Sauerstoff ausgesetzt und die Transmissionsrate auf der anderen Seite der Folie gemessen.

Die Kohlendioxiddurchlässigkeit der Folie wird analog zu ASTM D3985 bestimmt.

Sowohl Sauerstoff- als auch Kohlendioxiddurchlässigkeit werden bei verschiedener Umgebungsfeuchtigkeit bestimmt.

Die Messungen der Gasdurchlässigkeit bei einer relative Feuchte von 85% erfolgten mit dem Meßgerät Ox-Tran Twin der Firma Mocon und die Messungen bei einer relativen Feuchte von 0% mit dem Meßgerät L100 der Firma Lissy.

Die Werte der O₂ bzw. CO₂-Gasdurchlässigkeit von einer nur aus einer Polymerkomponente der erfindungsgemäßen O₂-Gasbarriereschicht und von einer erfindungsgemäßen O₂-Barriereschicht bei einer relativen Feuchte von 0% bzw. von 85% zeigt die Tabelle 1A bzw. 1B.

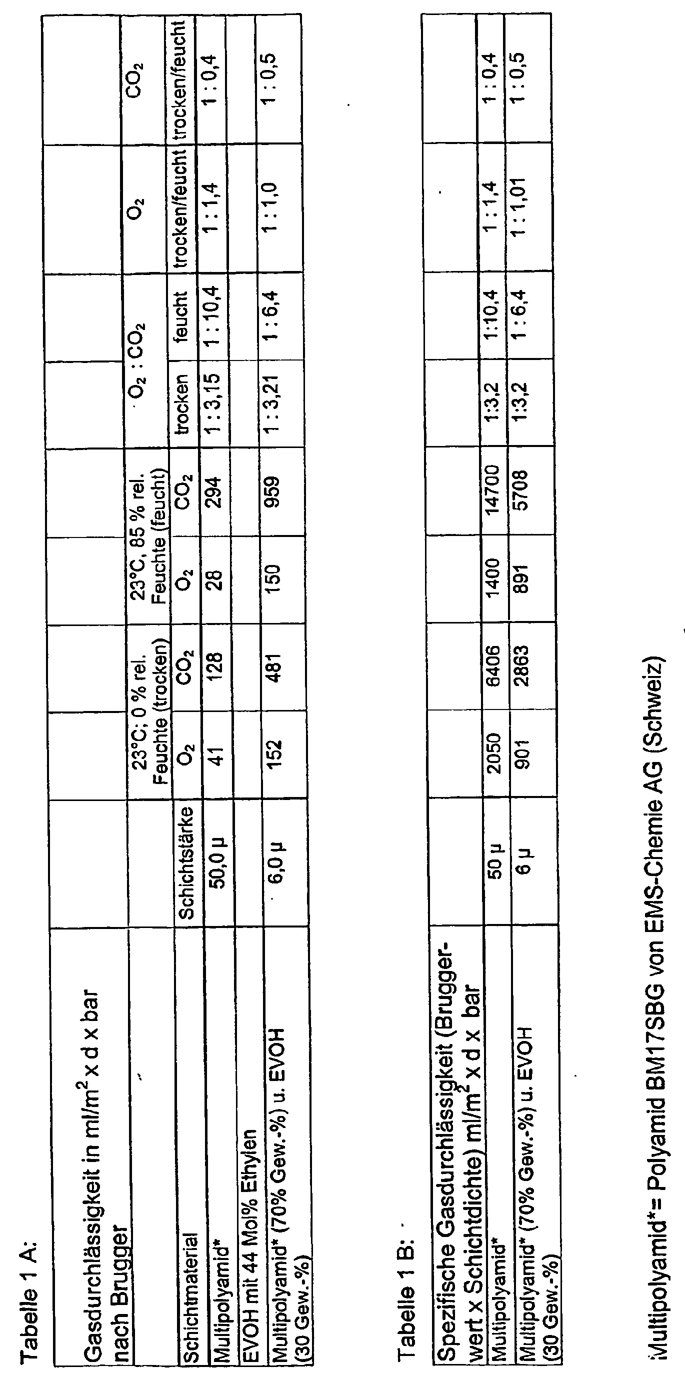

### Beispiel 1

Eine erfindungsgemäße Folie mit folgendem Schichtaufbau:
a) einer Außenschicht,
b) einer Haftvermittlerschicht,
c) einer O₂-Barriereschicht,
d) einer Haftvermittlerschicht und
e) einer Siegelschicht als Außenschicht.
wurde mit Hilfe des Coextrusionsfolienblas-Verfahrens hergestellt, wobei sie in Längsrichtung 1:3,3 und in Querrichtung 1:3,5 gereckt wurde.

Die Gesamtdicke der Folie betrug 55 µm. Die Dicken der einzelnen Schichten betrugen: 10 µm für die Außenschicht a), 8 µm für die Haftvermittlerschicht b), 6 µm für die O₂-Gasbarriereschicht c), 16 µm für die Haftvermittlerschicht d) und 15 µm für die Siegelschicht e).

Als Materialien für die einzelnen Schichten wurden verwendet:
für die Außenschicht a.) eine Mischung aus 56 Gew.-% eines EVA, 40 Gew.-% LLDPE und 4 Gew.% Antiblockiermittel,
für die Haftvermittlerschicht b) eine Mischung aus 50 Gew.-% eines mit Maleinsäureanhydrid modifiziertem EVA und 50 Gew.-% LLDPE,
für die O₂-Barriereschicht c) eine Mischung aus EVOH mit 44 Mol-% Ethylen und einem Multipolyamid im Gewichtsverhältnis EVOH zu Multipolyamid 30:70,
für die Haftvermittlerschicht d) eine Mischung aus 50 Gew.% eines mit Maleinsäureanhydrid modifiziertem EVA und 50 Gew.% LLDPE,
für die Siegelschicht e) eine Mischung aus 78 Gew.-% EVA, 20 Gew.-% LLDPE und 2 Gew.-% Antiblockiermittel und Gleitmittel.

Die Werte der O₂-Gasdurchlässigkeit der erfindungsgemäßen Folie bei einer relativen Feuchte von 0% und von 85% zeigt die Tabelle 2, wobei die Messungen gemäß den vorstehenden Aufgaben durchgeführt wurden.

Die Messungen der Gasdurchlässigkeit bei einer relative Feuchte von 85% erfolgten mit dem Meßgerät Ox-Tran Twin der Firma Mocon und die Messungen bei einer relativen Feuchte von 0% mit dem Meßgerät L100 der Firma Lissy.

**Tabelle 2:**

| Spezifische Sauerstoffdurchlässigkeit [ml/m³ x d x bar] | | Spezifische Kohlendioxiddurchlässigkeit [ml/m³ x d x bar] |
|---|---|---|
| Mischung aus EVOH und Multipolyamid* | 30/70 (Gew.-%) | 30:70 (Gew.-%) |
| 0% rel. Feuchte | 644 | 424 x 5,5 |
| 85% rel. Feuchte | 544 | 888 x 5,5 |

| | | |
|---|---|---|
| Multipolyamid*= Polyamid BM17SBG von EMS-Chemie AG (Schweiz) | | |

## Patentansprüche

1. Folie umfassend wenigstens eine O₂-Gasbarriereschicht bestehend im wesentlichen aus einer Mischung aus einem EthylenNinylalkohol-Copolymer (EVOH) und wenigstens einem Multipolyamid, wobei das Multipolyamid aus den 3 Komponenten
I) Hexamethylendiamin / Adipinsäure (Polyamid 6,6),
II) Hexamethylendiamin / Azelainsäure (Polyamid 6,9) und/oder Hexamethylendiamin / Sebazinsäure (Polyamid 6,10) und
III) Hexamethylendiamin / Isophthalsäure (Polyamid 6I) und/oder Hexamethylendiamin 8 Terephthalsäure (Polyamid 6T)
aufgebaut ist.

2. Folie gemäß Anspruch 1, **dadurch gekennzeichnet, daß** das Multipolyamid aus
a) 15-75 Mol-% der Komponente I,
b) 15-65 Mol-% der Komponente II und
c) 10-70 Mol-% der Komponente III,
wobei die Gesamtmenge der Komponenten I - III immer 100 Mol-% ergeben muß, aufgebaut ist.

3. Folie gemäß Anspruch 1, **dadurch gekennzeichnet, daß** das Multipolyamid sich aus
a) 15-60 Mol% der Komponente I,
b) 15-55 Mol-% der Komponente II und
c) 10-45 Mol-% der Komponente III,
wobei die Gesamtmenge der Komponenten I-III immer 100 Mol-% ergeben muß, aufgebaut ist.

4. Folie gemäß Anspruch 1, **dadurch gekennzeichnet, daß** das Multipolyamid aus
a) 35-55 Mol-% der Komponente I,
b) 15-55 Mol-% der Komponente II und
c) 10-30 Mol-% der Komponente III,
wobei die Gesamtmenge der Komponenten I - III immer 100 Mol-% ergeben muß, aufgebaut ist.

5. Folie gemäß einem der Ansprüche 1 bis 4, **dadurch gekennzeichnet, daß** das Ethylen/Vinylalkohol-Copolymer aus 20-50 Mol-% Ethylen, vorzugsweise aus 42-48 Mol-% Ethylen, besonders bevorzugt aus 38-48 Mol-% Ethylen besteht.

6. Folie gemäß einem der Ansprüche 1 bis 5, **dadurch gekennzeichnet, daß** die O₂-Gasbarriereschicht aus einer Mischung aus 10-45 Gew.-% EVOH und 55-90 Gew.-% Multipolyamid, jeweils bezogen auf die Gesamtmenge der Mischung, besteht.

7. Folie gemäß Anspruch 6, **dadurch gekennzeichnet, daß** die O₂-Gasbarriereschicht aus einer Mischung aus 20-40 Gew.-% EVOH und 60-80 Gew.-% Multipolyamid, jeweils bezogen auf die Gesamtmenge der Mischung, besteht.

8. Folie gemäß einem der Ansprüche 1 bis 7, enthaltend wenigstens eine Außenschicht, vorzugsweise zwei Außen- bzw. Oberflächenschichten, von denen wenigstens eine Schicht siegelbar ist.

9. Folie gemäß Anspruch 8, **dadurch gekennzeichnet, daß** als Außenschicht-Material eine Mischung aus EthylenNinylacetat-Copolymer (EVA) und LLDPE (Linear Low Density Polyethylene) verwendet wird.

10. Folie gemäß Anspruch 9, **dadurch gekennzeichnet, daß** als Siegelschichtmaterial eine Mischung aus 40 - 65 Gew.-% eines EthylenNinylacetat Copolymerisats und 35 - 60 Gew.-% LLDPE , wobei die Gesamtmenge der Polymerkomponenten immer 100 Gew.-% ergeben muß, eingesetzt wird.

11. Mehrschichtige Folie gemäß einem der Ansprüche 1 bis 10, **dadurch gekennzeichnet, daß** sie aus der O₂-Gasbarriereschicht und 2 Außenschichten aufgebaut ist.

12. Folie gemäß Anspruch 11, **dadurch gekennzeichnet, daß** die Schichten jeweils durch eine Haftvermittlerschicht verbunden sind.

13. Folie gemäß Anspruch 12, **dadurch gekennzeichnet, daß** die Haftvermittlerschichten auf einer Mischung aus mit Maleinsäureanhydrid gepfropftem Ethylen/Vinylacetat-Copolymer und LLDPE basieren.

14. Folie gemäß Anspruch 12 oder 13, **dadurch gekennzeichnet, daß** zumindest eine Haftvermittlerschicht gefärbt ist.

15. Folie gemäß einem der Ansprüche 1-14, **dadurch gekennzeichnet, daß** die Folie monoaxial, vorzugsweise biaxial gereckt ist.

16. Folie gemäß einem der Ansprüche 1-15, **dadurch gekennzeichnet, daß** die Folie wenigstens eine vernetzte Schicht aufweist.

17. Folie gemäß einem der Ansprüche 1-16, **dadurch gekennzeichnet, daß** die Folie schrumpffähig ist.

18. Verwendung einer Folie gemäß einem der Ansprüche 1 bis 17 zur Verpackung von verderblichen, gasenden Produkten, vorzugsweise Lebensmitteln.

19. Verwendung gemäß Anspruch 18 Verpackung von Käse, vorzugsweise noch reifendem Käse.

20. Verwendung gemäß Anspruch 18 oder 19 zur Verpackung von halbhartem und/oder hartem Käse.

21. Verpackung für verderbliche, gasende Produkte, vorzugsweise Lebensmittel, aus einer Folie gemäß einem der Ansprüche 1 bis 17.

22. Verpackung für Käse aus einer Folie gemäß einem der Ansprüche 1 bis 17.

23. Käsereifebeutel aus einer Folie gemäß einem der Ansprüche 1 bis 17.

## Claims

1. A film comprising at least one O₂ gas barrier layer substantially consisting of a mixture of an ethylene/vinyl alcohol copolymer (EVOH) and at least one multipolyamide, wherein the multipolyamide is made up of the 3 components
I) hexamethylenediamine/adipic acid (polyamide 6,6),
II) hexamethylenediamine/azelaic acid (polyamide 6,9) and/or hexamethylenediamine/sebacic acid (polyamide 6,10) and
III) hexamethylenediamine/isophthalic acid (polyamide 6,I) and/or hexamethylenediamine/terephthalic acid (polyamide 6,T).

2. A film according to claim 1, **characterised in that** the multipolyamide is made up of
a) 15-75 mol% of component I,
b) 15-65 mol% of component II and
c) 10-70 mol% of component III,
wherein the total quantity of components I-III must always add up to 100 mol%.

3. A film according to claim 1, **characterised in that** the multipolyamide is made up of
a) 15-60 mol% of component I,
b) 15-55 mol% of component II and
c) 10-45 mol% of component III,
wherein the total quantity of components I-III must always add up to 100 mol%.

4. A film according to claim 1, **characterised in that** the multipolyamide is made up of
a) 35-55 mol% of component I,
b) 15-55 mol% of component II and
c) 10-30 mol% of component III,
wherein the total quantity of components I-III must always add up to 100 mol%.

5. A film according to any one of claims 1 to 4, **characterised in that** the ethylene/vinyl alcohol copolymer consists of 20-50 mol% ethylene, preferably 42-48 mol% ethylene, particularly preferably 38-48 mol% ethylene.

6. A film according to any one of claims 1 to 5, **characterised in that** the O₂ gas barrier layer consists of a mixture of 10-45 wt.% EVOH and 55-90 wt.% multipolyamide, in each case relative to the total quantity of the mixture.

7. A film according to claim 6, **characterised in that** the O₂ gas barrier layer consists of a mixture of 20-40 wt.% EVOH and 60-80 wt.% multipolyamide, in each case relative to the total quantity of the mixture.

8. A film according to any one of claims 1 to 7, containing at least one outer layer, preferably two outer or surface layers, at least one of which layers is heat-sealable.

9. A film according to claim 8, **characterised in that** a mixture of ethylene/vinyl acetate copolymer (EVA) and LLDPE (linear low density polyethylene) is used as the outer layer material.

10. A film according to claim 9, **characterised in that** a mixture of 40-65 wt.% of an ethylene/vinyl acetate copolymer and 35-60 wt.% of LLDPE, wherein the total quantity of the polymer components must always add up to 100 wt.%, is used as the heat-sealing layer material.

11. A multilayer film according to any one of claims 1 to 10, **characterised in that** it is made up of the O₂ gas barrier layer and 2 outer layers.

12. A film according to claim 11, **characterised in that** the layers are in each case joined together by a coupling agent layer.

13. A film according to claim 12, **characterised in that** the coupling agent layers are based on a mixture of maleic anhydride-grafted ethylene/vinyl acetate copolymer and LLDPE.

14. A film according to claim 12 or 13, **characterised in that** at least one coupling agent layer is coloured.

15. A film according to any one of claims 1-14, **characterised in that** the film is monoaxially, preferably biaxially, drawn.

16. A film according to any one of claims 1-15, **characterised in that** the film comprises at least one crosslinked layer.

17. A film according to any one of claims 1-16, **characterised in that** the film is shrinkable.

18. Use of a film according to any one of claims 1 to 17 for packaging perishable, gas-releasing products, preferably foodstuffs.

19. Use according to claim 18 for packaging cheese, preferably cheese which is still ripening.

20. Use according to claim 18 or claim 19 for packaging semi-hard and/or hard cheese.

21. Packaging for perishable, gas-releasing products, preferably foodstuffs, made from a film according to any one of claims 1 to 17.

22. Packaging for cheese made from a film according to any one of claims 1 to 17.

23. A cheese ripening pouch made from a film according to any one of claims 1 to 17.

## Revendications

1. Film comprenant au moins une couche barrière au gaz O₂, consistant essentiellement en un mélange d'un copolymère éthylène/alcool vinylique (EVOH) et d'au moins un multipolyamide, le multipolyamide étant constitué des 3 composants
(I) hexaméthylènediamine/acide adipique (polyamide 6, 6),
(II) hexaméthylènediamine/acide azélaïque (polyamide 6,9) et/ou hexaméthylènediamine/acide sébacique (polyamide 6,10) et
(III) hexaméthylènediamine/acide isophtalique (polyamide 6I) et/ou hexaméthylènediamine/acide téréphtalique (polyamide 6T).

2. Film selon la revendication 1, **caractérisé en ce que** le multipolyamide est constitué de
a) 15-75 % en moles du composant I,
b) 15-65 % en moles du composant II et
c) 10-70 % en moles du composant III,
la quantité totale des composants I-III devant toujours donner 100 % en moles.

3. Film selon la revendication 1, **caractérisé en ce que** le multipolyamide est constitué de
a) 15-60 % en moles du composant I,
b) 15-55 % en moles du composant II et
c) 10-45 % en moles du composant III,
la quantité totale des composants I-III devant toujours donner 100 % en moles.

4. Film selon la revendication 1, **caractérisé en ce que** le multipolyamide est constitué de
a) 35-55 % en moles du composant I,
b) 15-55 % en moles du composant II et
c) 10-30 % en moles du composant III,
la quantité totale des composants I-III devant toujours donner 100 % en moles.

5. Film selon l'une quelconque des revendications 1 à 4, **caractérisé en ce que** le copolymère éthylène/alcool vinylique consiste en 20-50 % en moles, de préférence en 42-48 % en moles d'éthylène, de façon particulièrement préférée en 38-48 % en moles d'éthylène.

6. Film selon l'une quelconque des revendications 1 à 5, **caractérisé en ce que** la couche barrière au gaz O₂ consiste en un mélange de 10-45 % en poids de EVOH et 55-90 % en poids de multipolyamide, chaque fois par rapport à la quantité totale du mélange.

7. Film selon la revendication 6, **caractérisé en ce que** la couche barrière au gaz O₂ consiste en un mélange de 20-40 % en poids de EVOH et 60-80 % en poids de multipolyamide, chaque fois par rapport à la quantité totale du mélange.

8. Film selon l'une quelconque des revendications 1 à 7, contenant au moins une couche externe, de préférence deux couches externes ou superficielles, dont au moins une couche est soudable.

9. Film selon la revendication 8, **caractérisé en ce qu'**on utilise en tant que matériau de couche externe un mélange de copolymère éthylène/acétate de vinyle (EVA) et LLDPE (Linear Low Density Polyethylène).

10. Film selon la revendication 9, **caractérisé en ce que** le matériau de couche soudable est un mélange de 40-65 % en poids d'un copolymère éthylène/acétate de vinyle et 35-60 % en poids de LLDPE, la quantité totale des composants polymères devant toujours donner 100 % en poids.

11. Film multicouche selon l'une quelconque des revendications 1 à 10, **caractérisé en ce qu'**il est constitué de la couche barrière au gaz O₂ et de 2 couches externes.

12. Film selon la revendication 11, **caractérisé en ce que** les couches sont assemblées chacune par une couche de promoteur d'adhérence.

13. Film selon la revendication 12, **caractérisé en ce que** les couches de promoteurs d'adhérence sont à base d'un mélange de LLDPE et de copolymère éthylène/acétate de vinyle greffé avec de l'anhydride maléique.

14. Film selon la revendication 12 ou 13, **caractérisé en ce qu'**au moins une couche de promoteur d'adhérence est colorée.

15. Film selon l'une quelconque des revendications 1 à 14, **caractérisé en ce que** le film est étiré monoaxialement, de préférence biaxialement.

16. Film selon l'une quelconque des revendications 1 à 15, **caractérisé en ce que** le film comporte au moins une couche réticulée.

17. Film selon l'une quelconque des revendications 1 à 16, **caractérisé en ce que** le film est rétractable.

18. Utilisation d'un film selon l'une quelconque des revendications 1 à 17, pour le conditionnement de produits périssables dégageant des gaz, de préférence de produits alimentaires.

19. Utilisation selon la revendication 18, pour le conditionnement de fromage, de préférence de fromage encore en affinage.

20. Utilisation selon la revendication 18 ou 19, pour le conditionnement de fromage à pâte dure et/ou à pâte demi-dure.

21. Emballage pour produits périssables dégageant des gaz, de préférence de produits alimentaires, à base d'un film selon l'une quelconque des revendications 1 à 17.

22. Emballage pour fromage à base d'un film selon l'une quelconque des revendications 1 à 17.

23. Sac pour affinage de fromage à base d'un film selon l'une quelconque des revendications 1 à 17.
